# EUROPÄISCHE PATENTANMELDUNG

(11) **EP 4 292 960 A1**
(43) Veröffentlichungstag der Anmeldung: **20.12.2023**
(21) Anmeldenummer: 23179801.8
(22) Anmeldetag: 16.06.2023
(51) Int. Cl.: B65G 47/14, B65G 25/04, B65G 25/08, B65G 27/12, B65G 27/18, B23P 19/00, B26D 7/30, B26D 7/32, B44B 5/02, G01B 11/02, G01B 11/30, B65G 43/08

(54) **VORRICHTUNG ZUM BEREITSTELLEN VON VEREINZELTEN STANZTEILEN**

(30) Priorität: 17.06.2022 AT 504352022
(71) Anmelder: Hrach, Thomas, 2380 Perchtoldsdorf (AT)
(72) Erfinder: HRACH, Thomas, 2380 Perchtoldsdorf (AT); WIESEGGER, Werner, 3910 Zwettl (AT)
(74) Vertreter: Beer & Partner Patentanwälte KG

(57) **Zusammenfassung**

Eine Vorrichtung zum Bereitstellen von vereinzelten Stanzteilen (8), die vorzugsweise aus Edelmetall bestehen, für die Herstellung von Prägeprodukten hat eine Steuerung (11), ein Mittel zum Vereinzeln der Stanzteile (8) und eine Förderrichtung (10), entlang der Stanzteile (8) in Richtung zu einer Entnahmestation (24) befördert werden. Zudem hat die Vorrichtung einen Träger (7) zum Aufnehmen von zu vereinzelnden Stanzteilen (8), insbesondere von einem aufgeschütteten Stanzteilhaufen (5), ein Mittel (13) zum Vereinzeln der Stanzteile (8) umfassend eine Fördereinrichtung mit einem schwingenden Träger (14) und einen Träger (23) zum Aufnehmen von vereinzelten Stanzteilen (8).

## Beschreibung

Die Erfindung betrifft eine Vorrichtung und ein Verfahren zum Bereitstellen von vereinzelten Stanzteilen, die vorzugsweise aus Edelmetall bestehen, für die Herstellung von Prägeprodukten.

Zum Herstellen von Prägeprodukten, zum Beispiel Münzen, aus Edelmetall ist es bekannt, Stanzteile einer Presse, in der die Stanzteile geprägt werden, zuzuführen. Solche Stanzteile werden auch als Ronden bezeichnet. Hierfür müssen die Ronden zuvor vereinzelt werden. Wenn im Weiteren Bezug auf Ronden genommen wird, dann können damit aber jegliche Stanzteile aus Edelmetall für die Herstellung von Prägeprodukten gemeint sein, z.B. Barren oder mehreckige Teile.

Zum Vereinzeln der Ronden ist es einerseits bekannt, dass die Ronden per Hand einzeln direkt in die Presse oder auf eine Zuführeinrichtung, insbesondere eine lineare Fördereinrichtung, aufgelegt werden. Das Auflegen auf einen Tisch, von dem aus ein Roboterarm vereinzelte Ronden entnimmt, ist nicht durchführbar, da hierbei ein erhöhtes Sicherheitsrisiko besteht und es vermieden werden muss, dass Gliedmaßen einer Person in ein Arbeitsfeld eines Roboterarmes gelangen. Das Vereinzeln von Ronden per Hand ist zudem zeit- und kostenaufwendig.

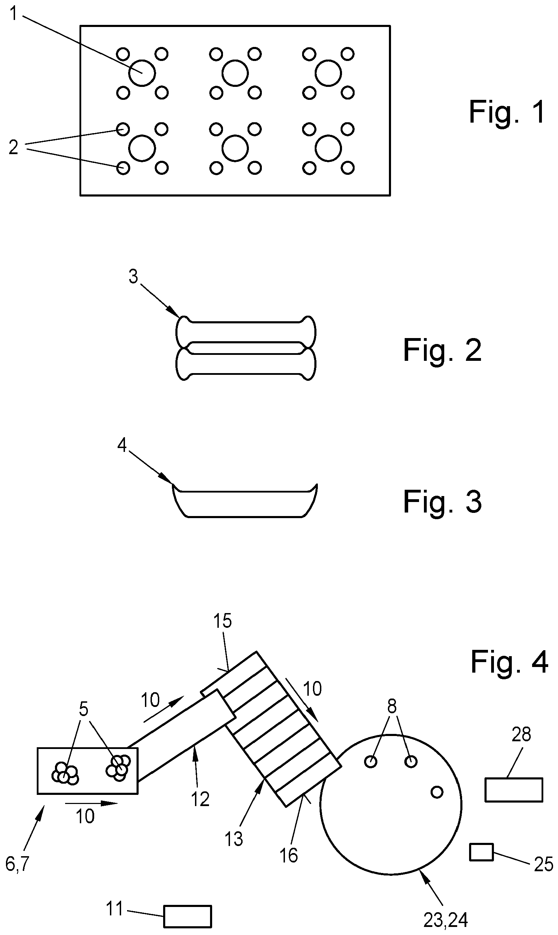

Zum Vereinzeln der Ronden sind zudem Rondenstapel bekannt, die in einer vertikal ausgerichteten Halteeinrichtung gehalten sind (Fig. 1). Am unteren Ende der Halteeinrichtung ist eine Öffnung vorgesehen, aus der eine Ronde aus dem Stapel entfernt werden kann. Hierzu wird ein Rondenstapel an eine automatische Vereinzelungseinrichtung angenähert, welche die unterste Ronde aus dem Stapel herausschiebt. Diese Ronde wird dann über eine lineare Fördereinrichtung in Richtung zur Presse gefördert.

Eine solche automatische Vereinzelung von Ronden aus einem Rondenstapel hat mehrere Nachteile.

Zum einen ist die Höhe des Rondenstapels auf Grund des Rondenmaterials begrenzt. Auf der untersten Ronde darf nicht zu viel Gewicht liegen, da sonst die Ronde nicht mehr vereinzelt werden kann. Dieses Problem tritt insbesondere bei Goldronden auf. Goldronden können nur schwer vereinzelt und dosiert werden. Somit ist die Zuführrate an vereinzelten Ronden bereits limitiert. Zum anderen kostet es Zeit, um einen leeren Stapel von der Vereinzelungseinrichtung zu entfernen und einen neuen, vollen Stapel heranzuführen. In dieser Zeit ist demnach keine Vereinzelung möglich. Eine kontinuierliche Zufuhr von Ronden ist nicht möglich, da die Rondenzufuhr auf Grund der Stapelwechsel diskontinuierlich erfolgt.

Für das Bilden eines Stapels wird ein Magazin benötigt, d.h. es werden für unterschiedliche Rondentypen unterschiedliche Größen an Magazinen benötigt. Für das Füllen eines Magazins mit einem Stapel wird eine zusätzliche, externe Vorrichtung benötigt.

Weitere Nachteile treten abhängig von der Größe und Form der zu vereinzelnden Ronden auf.

Sind die Ronden über Ihre Ober- und Unterseite bis zum Rand flach, dann liegen die Ronden auch vollflächig aufeinander auf und sind schwer zu vereinzeln. Sind die Ronden randgestaucht (Fig. 2), dann liegen die Ronden nur an entlang ihrer Ränder an Auflagepunkten auf und sind an sich einfacher zu vereinzeln. Jedoch können vor allem kleinere, dünnere Ronden nicht einfach randgestaucht werden, da die Ronde dann knickt und sich der Rand aufstellt. Solche Ronden können nicht mehr zum Herstellen von Prägeprodukten verwendet werden. Zum Randgestauchen müssen Ronden eine dem Fachmann bekannte Mindestgröße aufweisen.

Somit ergibt sich insbesondere bei dünnen, nicht randgestauchten Ronden, die vollflächig aufeinander aufliegen, das Problem der Vereinzelung. Hier besteht das Risiko, dass mehr als eine Ronde - insbesondere zwei oder sogar mehr als zwei Ronden - zusammen aus dem Rondenstapel herausgeschoben und der Presse zugeführt werden. Dies wirkt sich dies negativ auf die Presse aus, da die Presse mit hoher Wahrscheinlichkeit beschädigt wird, wenn zwei Ronden zum Prägen zugeführt werden. Dies wirkt sich auch negativ auf die Produktion aus, da die Produktion angehalten werden muss, um die nicht vereinzelten Ronden aus der Presse zu entfernen. Dies bedingt einen Stillstand der gesamten Produktion. Dabei sinkt nicht nur die Produktivität und Anlagenverfügbarkeit, sondern verursacht auch mehr Materialausschuss, da die Ronden eben nicht mehr zum Herstellen von Prägeprodukten verwendet werden können.

Ein weiterer Nachteil bei der automatischen Vereinzelung von Rondenstapeln tritt dann auf, wenn die Ronden - wie dies häufig der Fall ist - einen Stanzgrad aufweisen (Fig. 3). Dieses Problem liegt unabhängig von der Größe/Dicke der Ronden vor. Beim Herausschieben von Ronden mit einem Stanzgrad aus dem Rondenstapel wird die Unterseite der darüberliegenden Ronde beschädigt. Beschädigte Ronden müssen aussortiert werden, was wiederum erhöhten Materialausschuss, gegebenenfalls zusätzliche Stillstandzeiten und geringere Produktivität bedeutet.

Der Erfindung liegt die Aufgabe zu Grunde, eine Vorrichtung und ein Verfahren zum Vereinzeln von Stanzteilen aus Edelmetall zum Herstellen von Prägeprodukten zur Verfügung zu stellen, mit denen die Nachteile des Standes der Technik zumindest weitestgehend vermieden werden.

Insbesondere ist es Aufgabe der Erfindung, eine kontinuierliche Zufuhr von Ronden zur Presse zu ermöglichen, wobei die Gefahr von Materialausschuss und von Stillstandzeiten verringert und zugleich die Produktivität und Anlagenverfügbarkeit erhöht wird.

Gelöst wird diese Aufgabe mit einer Vorrichtung mit den Merkmalen nach Anspruch 1 sowie mit einem Verfahren mit den Merkmalen nach Anspruch 16.

Bevorzugte und vorteilhafte Ausführungsformen der Erfindung sind Gegenstand der Unteransprüche.

Die erfindungsgemäße Vorrichtung weist einen Träger zum Aufnehmen von Stanzteilen, insbesondere von einem aufgeschütteten Stanzteilhaufen, auf. Somit können im Rahmen der Erfindung Ronden bzw. ein ungeordneter Haufen von Ronden einfach und unabhängig von Größe und Form der Ronden aufgeschüttet werden. Das Aufschütten kann per Hand oder mechanisch erfolgen.

Die erfindungsgemäße Vorrichtung weist weiters ein Mittel zum Vereinzeln der Stanzteile umfassend eine Fördereinrichtung mit einem schwingenden Träger auf. Durch das Vereinzeln wird erzielt, dass vereinzelte Ronden dem weiteren Prozess zur Verfügung gestellt werden können, wobei das Bereitstellen von vereinzelten Ronden an die nächste Bearbeitungsstation abhängig von der benötigten Anzahl an Ronden in der Presse gesteuert werden kann.

Der Träger des Mittels zum Vereinzeln der Stanzteile ist gelagert, um eine schwingende Bewegung auszuführen, insbesondere eine oszillierende Bewegung entlang der Förderrichtung.

Durch die oszillierende und insbesondere niederfrequente (unter 30 Hz) Bewegung des Trägers werden die Ronden sowohl in Förderrichtung fördert als auch vereinzelt. Die oszillierende Bewegung des Trägers ist besonders vorteilhaft, da somit eine im Einsatzgebiet der Erfindung immanent wichtige, materialschonende Kombination aus Förderung der Ronden in Förderrichtung und Vereinzelung der Ronden erzielt werden kann.

Bekannt sind Vibrationsförderer, die durch periodische Mikrowurfbewegungen Schüttgut befördern. Solche Vibrationsförderer umfassen eine federnd eingespannte Förderfläche, die mit Hilfe von Elektromagneten in periodische Vibration versetzt wird. Durch die Vibration wird das Schüttgut durch eine überlagerte Vorwärts- und Hubbewegung angehoben, wobei das Schüttgut nach einer kurzen Flugphase wieder auf die Förderfläche auftrifft. Während der Flugphase schwingt die Förderfläche wieder in die Ausgangsposition zurück. Schnelle Vibrationsförderer arbeiten mit einer Frequenz von ca. 240 Hz. Langsame Vibrationsförderer arbeiten mit einer Frequenz von ca. 30 bis 120 Hz. Eine solche Förderung ist im Einsatzgebiet der Erfindung, insbesondere wenn es sich um Goldronden handelt, möglich aber nachteilig, da das Rondenmaterial durch die Vibration zerkratzt und beschädigt wird und durch den Materialabtrag sogenannter Flitter entsteht. Somit geht nicht nur wertvolles Material verloren, sondern der erzeugte Flitter führt dazu, dass die Vorrichtung häufig gereinigt werden muss und während dem Reinigen stillsteht.

Die erfindungsgemäße Vorrichtung weist zudem einen Träger zum Aufnehmen von vereinzelten Stanzteilen auf. Die Anzahl von Ronden auf diesem Träger entspricht im Rahmen der Erfindung derjenigen Anzahl, die für eine kontinuierliche Beschickung der Presse notwendig ist. Die gewünschte Anzahl der Ronden auf diesem Träger gibt im Rahmen der Erfindung die Abnahmemenge der zu vereinzelnden Ronden und der vereinzelten Ronden vor, wodurch das Mittel zum Vereinzeln der Stanzteile, ein optionales Mittel zum Vordosieren sowie gegebenenfalls eine optional vor dem Mittel zum gravimetrischen Vordosieren vorgesehene erste Fördereinrichtung gesteuert werden können.

Die Kombination der vorab genannten Merkmale ermöglicht eine materialschonende, kontinuierliche, genaue und korrekte Vereinzelung und Dosierung/Zufuhr von Ronden unabhängig von deren Größe und Gewicht, wobei die Dosierung/Zufuhr vom tatsächlichen Bedarf der Presse gesteuert werden kann. Auf bekannte Rondenstapel sowie auf die damit einhergehende Notwendigkeit des mechanischen Umbaus der Vorrichtung kann verzichtet werden.

Im Rahmen der Erfindung kann vorgesehen sein, dass der Träger zum Aufnehmen von Stanzteilen durch ein Mittel zum Vordosieren gebildet ist oder durch eine in Förderrichtung davor, insbesondere unmittelbar davor und vorzugsweise überlappend darüber angeordnete, erste Fördereinrichtung. Die zuerst genannte Variante hat den Vorteil, dass der Aufbau der Vorrichtung insgesamt einfacher und somit günstiger ist. Der Vorteil der zuletzt genannten Variante liegt darin, dass bereits vor dem beispielsweise gravimetrischen Vordosieren eine gewisse Bevorratung an Ronden erzielt werden kann, was eine genaue Dosierung und kontinuierliche Zufuhr von Ronden positiv beeinflusst. Ein weiterer Vorteil der zuletzt genannten Variante besteht darin, dass die Vorrichtung automatisiert in einem geschlossenen Käfig arbeiten kann, wobei nur die erste Fördereinrichtung aus diesem Käfig herausragt. Somit können Ronden von einer Person ohne Gefahr, dass die Person mit weiteren Vorrichtungsteilen in Berührung kommt, aufgeschüttet werden, wodurch die Bediensicherheit erhöht wird.

In einer bevorzugten Ausführungsform ist die erste Fördereinrichtung ein endloses Förderband mit einer nach oben gerichteten Auflagefläche für zu vereinzelnde Stanzteile, wobei die Auflagefläche vorzugsweise mit einem Druckmittel in Verbindung steht, das auf einen Teil der Unterseite der Auflagefläche Druck ausübt. Somit kann zwar kein Vereinzeln des aufgeschütteten Rondenhaufens erzielt werden, jedoch eine erste, grobe Verteilung.

Das Druckmittel kann im Rahmen der Erfindung derart steuerbar sein, dass Druck in vorgegebenen periodischen Abständen oder an bestimmten Zeitpunkten abhängig vom Aufbringen von Stanzteilen ausgeübt wird.

In einer bevorzugten Weiterbildung ist vorgesehen, dass der Betriebszustand (EIN/AUS) und/oder die Geschwindigkeit der ersten Fördereinrichtung abhängig von der Anzahl an Stanzteilen, die sich auf dem Träger zum Aufnehmen von vereinzelten Stanzteilen befinden, und somit abhängig von der Anzahl an Stanzteilen, die dem Mittel zum gravimetrischen Vordosieren zugeführt werden sollen, steuerbar ist. Dies trägt zu einem kontinuierlichen Bereitstellen von vereinzelten Ronden bei.

Die auf der ersten Fördereinrichtung befindlichen Ronden können insbesondere durch Schwerkraft auf das unterhalb der ersten Fördereinrichtung angeordnete Mittel zum Vordosieren fallen.

Im Rahmen der Erfindung ist es zudem bevorzugt, wenn das Mittel zum Vordosieren ein Mittel zum gravimetrischen Vordosieren, insbesondere eine kombinierte Förder- und Wiegeeinrichtung zum Erfassen des ursprünglich aufgebrachten Gewichtes der Stanzteile, vorzugsweise ein mit einer Waage in Verbindung stehendes Förderband ist und/oder eine Einrichtung, beispielsweise eine Kamera oder einen Sensor, zum Erfassen der ursprünglich aufgebrachten Menge der Stanzteile umfasst.

Insbesondere wenn ein Mittel zum gravimetrischen Vordosieren ein mit einer Waage in Verbindung stehendes, endloses Förderband ist, kann eine konstruktiv einfache aber sichere Förderung und Bestimmung von Gewicht und Anzahl von zu vereinzelnden Ronden erreicht werden. Über das gemessene Gewicht kann die Anzahl der aufgebrachten Ronden bestimmt werden. Somit kann auch gesteuert werden, dass nicht zu viel und nicht zu wenig Ronden dem nachfolgenden Mittel zum Vereinzeln der Ronden zugeführt werden.

Es wird demnach eine wesentliche Kennzahl erfasst, um die richtige Anzahl an Ronden bereit zu stellen.

Die Kombination aus einem Mittel zum gravimetrischen Vordosieren und dem Mittel zum Vereinzeln der Stanzteile ermöglicht besonders vorteilhaft eine einfache aber materialschonende, kontinuierliche, genaue und korrekte Vereinzelung und Dosierung/Zufuhr von Ronden unabhängig von deren Größe und Gewicht, wobei die Dosierung/Zufuhr vom tatsächlichen Bedarf der Presse gesteuert werden kann.

In einer bevorzugten Weiterbildung dieser Ausführungsform ist ein Sender zum Übertragen der von der Waage und/oder von der Kamera und/oder von dem Sensor ermittelten Messdaten an die Steuerung vorgesehen, so dass die Steuerung z.B. über das gemessene Gewicht ermitteln kann - beispielsweise über eine hinterlegte Tabelle mit spezifischen Gewichten von unterschiedlichen Ronden -, wie viele zu vereinzelnde Ronden sich auf dem Förderband befinden.

Der Betriebszustand und/oder die Geschwindigkeit des Mittels zum gravimetrischen Vordosieren ist vorzugsweise abhängig von den von der Waage ermittelten Messdaten und abhängig von der Anzahl an Stanzteilen, die sich auf dem Träger zum Aufnehmen von vereinzelten Stanzteilen befinden, durch die Steuerung steuerbar. Dies trägt zu einem kontinuierlichen Bereitstellen von vereinzelten Ronden bei.

Das Mittel zum Vordosieren ist vorzugsweise in Förderrichtung vor, insbesondere unmittelbar vor und vorzugsweise überlappend über dem Mittel zum Vereinzeln der Stanzteile angeordnet. Somit ist bekannt, wie viele Ronden im Weiteren vereinzelt werden sollen und die Ronden können insbesondere durch Schwerkraft auf das Mittel zum Vereinzeln der Stanzteile fallen.

In einer bevorzugten Ausführungsform der Erfindung ist vorgesehen, dass der Träger des Mittels zum Vereinzeln der Stanzteile eine entlang der Förderrichtung verlaufende Längserstreckung, ein dem Mittel zum Vordosieren zugeordnetes, erstes Trägerende und ein in Längserstreckung gegenüberliegendes, zweites Trägerende aufweist, dass das erste Trägerende und vorzugsweise auch das zweite Trägerende gelagert ist, um einen Aufwärts- und Abwärtshub auszuüben, und dass das erste Trägerende und das zweite Trägerende gelagert sind, um einen Vorwärts- und Rückwärtshub auszuüben.

Unter Hub wird im Rahmen der Erfindung nicht nur die reine Bewegung verstanden, sondern auch der Weg, der zwischen dem oberen und dem unteren Totpunkt bzw. den seitlichen Totpunkten zurückgelegt wird. Aufwärts- und Abwärtshub verstehen sich im Wesentlichen senkrecht zur Förderrichtung. Das zweite Trägerende muss nicht zwingend einen Aufwärts- und Abwärtshub ausüben - es ist jedoch bevorzugt, wenn zweites Trägerende dies tut, da somit die Abgabe an die Entnahmestation vereinfacht wird. Vorwärts- und Rückwärtshub verstehen sich im Wesentlichen entlang der Förderrichtung. Somit kann eine vorteilhafte Kombination aus schwingender, oszillierender und gegebenenfalls leicht (niederfrequent) vibrierender Bewegung des Trägers erzielt werden.

In einer bevorzugten Weiterbildung ist vorgesehen, dass der Hub des ersten Trägerendes größer ist als der Hub des zweiten Trägerendes. Dies führt dazu, dass die Hubgeschwindigkeit in Richtung zum zweiten Ende zunimmt, wodurch der Vereinzelungseffekt erhöht wird.

Um die im Rahmen der Erfindung bevorzugte Bewegung des Trägers zu erzielen, kann der Träger wie folgt gelagert sein:
Am ersten Trägerende kann wenigstens ein drehbar gelagertes Drehelement, insbesondere eine Scheibe oder ein Zylinder, mit einer Drehachse vorgesehen sein, wobei sich die Drehachse im Wesentlichen senkrecht zur Förderrichtung erstreckt und wobei der Träger über einen Abstandhalter mit dem Drehelement kraftschlüssig verbunden ist.

Der Abstandhalter kann in einem Abstand zur Drehachse des Drehelements mit dem Drehelement verbunden sein, wobei der Abstand vom Abstandhalter zur Drehachse vorzugsweise veränderbar, insbesondere stufenlos einstellbar, ist. Durch die dezentrale Lagerung bzw. Exzentrizität wird der Hub sowohl im Wesentlichen senkrecht zur als auch in Richtung der Förderrichtung erzielt. Somit kann der Hub in alle Richtungen eingestellt werden und der Vereinzelungseffekt kann auf Ronden mit unterschiedlicher Größe und unterschiedlichem Gewicht eingestellt werden. Je exzentrischer, desto größer der Hub. Beispielsweise kann der Abstand bei kleinen, leichten Ronden verringert und bei großen, schwereren Ronden erhöht werden.

Weiters kann das Drehelement eine längliche Aussparung, insbesondere eine Nut, aufweisen, die sich von einem der Drehachse zugewandten Ende (das Ende kann sich mit der Drehachse decken) zu einem der Drehachse abgewandten Ende (in Richtung zum äußeren Umfang des Drehelementes) erstreckt (beispielsweise bei einem runden Drehelement radial) und entlang (vorzugsweise innerhalb) der der Abstandhalter verstellbar festlegbar ist.

In einer bevorzugten Weiterbildung ist das zweite Trägerende um eine Schwenkachse schwenkbar gelagert. Vorzugsweise verläuft die Schwenkachse durch eine durchlaufende Welle oder durch einander zugeordnete Achsstummel, die insbesondere im Wesentlichen in Richtung der Förderrichtung und vorzugsweise auch im Wesentlichen senkrecht zur Förderrichtung bewegbar angeordnet ist/sind.

In einer besonders bevorzugten Weiterbildung ist vorgesehen, dass der Träger ein profiliertes Flächenelement als Auflage für die zu vereinzelnden Stanzteile aufweist, insbesondere ein treppenartig abgestuftes Flächenelement, dessen Höhe sich vom ersten Trägerende bis zum zweiten Trägerende verringert. Unter treppenstufig werden auch leicht sägezahnförmige Verläufe verstanden. Insbesondere werden unter treppenartigen Verläufen alle Verläufe verstanden mit einer wiederkehrenden Folge von horizontaler bzw. leicht dazu geneigter Auflagefläche für wenigstens eine Ronde gefolgt von einem Abschnitt, in dem sich im Wesentlichen die Höhe des Elementes verringert. Somit gelangen Ronden von einer Stufe in Förderrichtung zur nächsten Stufe, können aber wegen der Anschlagfläche nicht mehr zurück. Es hat sich als besonders vorteilhaft gezeigt, dass durch die Abstufung und oszillierende Bewegung ein materialschonendes und wirksames Vereinzeln stattfindet.

Im Rahmen der Erfindung ist es bevorzugt, wenn das Mittel zum Vereinzeln der Stanzteile in Förderrichtung vor, insbesondere unmittelbar vor und vorzugsweise überlappend über dem Träger zum Aufnehmen von vereinzelten Stanzteilen angeordnet ist. Somit können vereinzelte Ronden durch Schwerkraft auf den Träger zum Aufnehmen von vereinzelten Stanzteilen fallen. Zwischen dem Mittel zum Vereinzeln der Stanzteile und dem Träger zum Aufnehmen von vereinzelten Stanzteilen kann aber auch eine weitere Fördereinrichtung vorgesehen sein.

Im Rahmen der Erfindung kann der Träger zum Aufnehmen von vereinzelten Stanzteilen die Entnahmestation, insbesondere eine Entnahmestation von vereinzelten Stanzteilen durch einen Roboter, sein und einen Auflagebereich für Stanzteile, die vom Mittel zum Vereinzeln der Stanzteile zugeführt wurden, sowie einen Entnahmebereich von vereinzelt bereitgestellten Stanzteilen durch den Roboter aufweisen.

Der Träger zum Aufnehmen von vereinzelten Stanzteilen kann eine Entnahmestation zum direkten Zuführen von vereinzelten Stanzteilen zu einer Presse oder zum Zuführen von vereinzelten Stanzteilen auf eine zu einer Presse führenden Fördereinrichtung sein. Ob Ronden auf ein Förderband oder direkt in die Presse gelangen kann abhängig von der Leistung der Presse gewählt werden. Im Rahmen der Erfindung gibt Anzahl an vereinzelten Ronden auf Entnahmestation vor, wieviele Ronden auf das Mittel zum Vereinzeln der Ronden befördert und dort vereinzelt und anschließend der Entnahmestation zugeführt werden sollen.

Es ist bevorzugt, wenn der Betriebszustand und/oder die Geschwindigkeit und/oder der Hub des Mittels zum Vereinzeln der Stanzteile abhängig von der Anzahl an Stanzteilen, die sich auf dem Träger zum Aufnehmen von vereinzelten Stanzteilen befinden, durch die Steuerung steuerbar ist.

In einer besonders bevorzugten Ausführungsform ist vorgesehen, dass im Bereich des Mittels zum Vereinzeln der Stanzteile, insbesondere in Förderrichtung nach dem Mittel zum Vereinzeln der Stanzteile, vorzugsweise im Übergangsbereich vom Mittel zum Vereinzeln der Stanzteile zum Träger zum Aufnehmen von vereinzelten Stanzteilen, und/oder im Bereich des Trägers zum Aufnehmen von vereinzelten Stanzteilen, vorzugsweise nach dem Träger zum Aufnehmen von vereinzelten Stanzteilen, eine Messstation zum Erfassen von physischen Daten eines Stanzteiles vorgesehen ist.

Eine solche und im weiteren näher definierte Messtation kann auch unabhängig von den bislang zur erfindungsgemäßen Vorrichtung genannten Merkmalen bzw. in beliebiger Kombination mit deren Merkmalen umgesetzt werden.

In einer bevorzugten Weiterbildung umfasst die Messstation eine optische Messeinrichtung, insbesondere eine Kamera oder einen Sensor, die die Größe und/oder die Oberflächenbeschaffenheit des Stanzteiles erfasst.

Wenigstens eine Messeinrichtung kann auf die Oberseite der zu vermessenden Stanzteile ausgerichtet sein. Somit kann vorgesehen sein, dass ein Höhensensor von oben auf die Oberseite eines Stanzteiles gerichtet ist, womit bereits erkannt und überprüft werden kann, ob tatsächlich eine vereinzelte Ronde vorliegt oder fälschlicherweise zwei aufeinanderliegende Ronden, die der Presse nicht zugeführt werden sollten. Ein reines Überprüfen der Ronden von oben ist jedoch bei taktzeitabhängigen Pressen nicht möglich.

Um auch eine Zufuhr von vereinzelten Stanzteilen für taktzeitabhängigen Pressen zu ermöglichen, ist bevorzugt wenigstens eine Messeinrichtung auf einen seitlichen Rand der zu vermessenden Stanzteile ausgerichtet. Vorzugsweise ist ein Beleuchtungsmittel vorgesehen, dass die Stanzteile beleuchtet. In einer bevorzugten Weiterbildung weist die Messstation einen Träger mit einer profilierten Auflage, insbesondere eine wellen- oder mäanderförmige Auflage, oder einer lichtdurchlässigen Auflage für die Stanzteile auf. Auch eine wellen- oder mäanderförmige Auflage lassen eine ausreichende Beleuchtung und somit Sichtbarkeit der Rondenoberfläche zu, da die Ronden nicht vollflächig aufliegen. Somit kann beispielsweise seitlich mit Kamera auf eine Ronde geschaut und nicht nur geprüft werden, ob die Ronde vereinzelt ist, sondern ebenfalls, ob die Ronden in der richtigen Qualität vorliegen. Insbesondere können Höhe/Dicke, Größe, Durchmesser und Ebenheit der Ronde erfasst werden.

Solche Messstationen können einen wesentlichen Beitrag zur Qualitätssicherung beim Bereitstellen von vereinzelten Stanzteilen aus Edelmetall für die Herstellung von Prägeprodukten leisten.

Erfindungsgemäß ist ein Verfahren zum Bereitstellen von vereinzelten Stanzteilen, die vorzugsweise aus Edelmetall bestehen, für die Herstellung von Prägeprodukten, vorgesehen, bei dem Stanzteile vereinzelt und entlang einer Förderrichtung in Richtung zu einer Entnahmestation befördert werden, gekennzeichnet durch die folgenden Schritte:
a) Aufbringen von Stanzteilen, insbesondere Aufschütten eines Stanzteilhaufens, auf einen Träger zum Aufnehmen von Stanzteilen,
b) optionales Vordosieren der zu vereinzelnden Stanzteile durch ein Mittel zum Vordosieren, insbesondere Beförderung der Stanzteile in Förderrichtung und Erfassen der ursprünglich aufgebrachten Menge der Stanzteile,
c) Vereinzeln der Stanzteile durch ein Mittel zum Vereinzeln der Stanzteile umfassend eine Fördereinrichtung mit einem schwingenden Träger,
d) Bereitstellen der vereinzelten Stanzteile auf einem Träger zum Aufnehmen von vereinzelten Stanzteilen und
e) Steuern zumindest der Schritte b) und c) abhängig von der Anzahl an Stanzteilen, die sich auf dem Träger zum Aufnehmen von vereinzelten Stanzteilen befinden, durch eine Steuerung.

Weitere Einzelheiten und Merkmale der Erfindung ergeben sich aus der nachstehenden Beschreibung der Zeichnungen. Es zeigt:
- Fig. 1: eine Draufsicht auf bekannte Rondenstapel,
- Fig. 2: eine Seitenansicht einer randgestauchten Ronde,
- Fig. 3: eine Seitenansicht einer Ronde mit einem Stanzgrad,
- Fig. 4: den Aufbau einer bevorzugten Ausführungsform der erfindungsgemäßen Vorrichtung in Draufsicht,
- Fig. 5: eine optionale Anbindung der erfindungsgemäßen Vorrichtung an eine Presse,
- Fig. 6: eine schematische Schnittansicht einer optionalen ersten Fördereinrichtung,
- Fig. 7: Details einer bevorzugten Ausführungsform des Mittels zum Vereinzeln der Stanzteile und
- Fig. 8: eine schematisch dargestellte Messstation.

Fig. 1 zeigt aus dem Stand der Technik bekannte Rondenstapel 1, die jeweils in einer vertikalen Halteeinrichtung 2 gehalten sind. Die Rondenstapel 1 werden an eine automatische Vereinzelungseinrichtung angenähert, welche die unterste Ronde - sofern möglich - durch eine Öffnung herausschiebt und die Ronden somit vereinzelt. Die Ronden werden dann über eine lineare Fördereinrichtung in Richtung zu einer Presse gefördert.

Das Vereinzeln von Ronden ist einfacher, wenn die Ronden randgestaucht sind, da die Ronden dann an Ihren Rändern eine Stauchung 3 aufweisen (Fig. 2) und nicht vollflächig aufeinander aufliegen. Das Randstauchen ist jedoch bei vielen Ronden nicht möglich.

Das Vereinzeln von Ronden ist schwieriger, wenn die Ronden - wie dies häufig der Fall ist - einen Stanzgrad 4 aufweisen (Fig. 3).

Erfindungsgemäß können Ronden unabhängig von ihrer Größe und Form vereinzelt und einer Presse zugeführt werden.

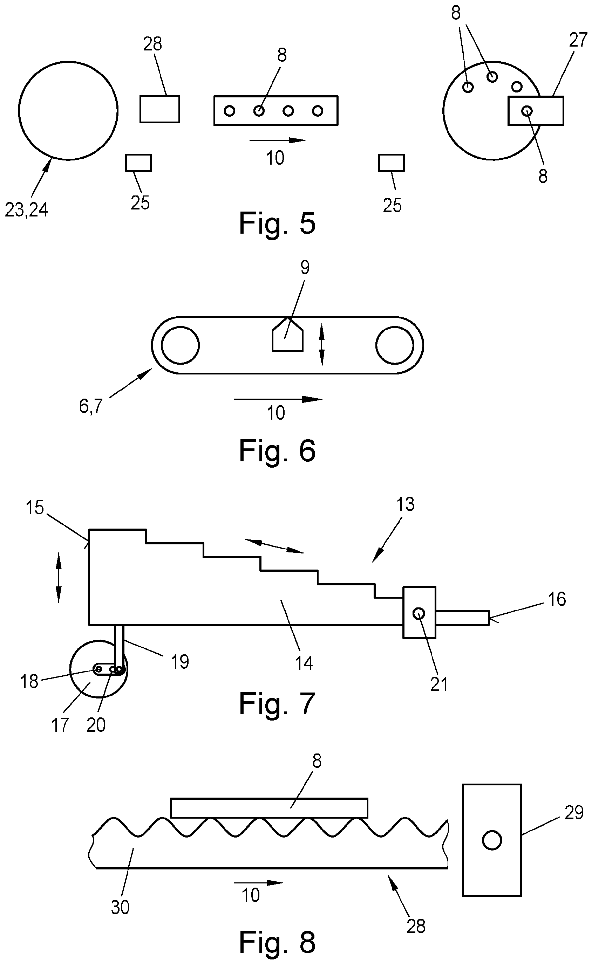

In dem in Fig. 4 dargestellten Ausführungsbeispiel kann ein Stanzteilhaufen 5 einfach auf eine erste Fördereinrichtung 6 als Träger 7 zum Aufnehmen von zu vereinzelnden Stanzteilen 8 aufgeschüttet werden. Die erste Fördereinrichtung 6 ist ein Förderband mit einer nach oben gerichteten Auflagefläche für zu vereinzelnde Stanzteile 8, wobei die Auflagefläche mit einem Druckmittel 9 (Fig. 6) in Verbindung steht, das auf einen Teil der Unterseite der Auflagefläche Druck ausübt. Auf der ersten Fördereinrichtung 6 werden die Stanzteile 8 in Förderrichtung 10 gefördert. Der Betriebszustand und/oder die Geschwindigkeit der ersten Fördereinrichtung 6 kann durch eine Steuerung 11 gesteuert werden.

Die erste Fördereinrichtung 6 ist oberhalb und vor einem Mittel 12 zum Vordosieren von Stanzteilen 8 angeordnet, so dass ein Stanzteilhaufen 5 per Schwerkraft auf das Mittel 12 zum Vordosieren fallen kann.

Das Mittel 12 zum Vordosieren ist eine kombinierte Förder- und Wiegeeinrichtung zum Erfassen des ursprünglich aufgebrachten Gewichtes der Stanzteile 8. Ein Sender kann das ermittelte Gewicht der Stanzteilhaufen 5 an die Steuerung 11 senden, die Betriebszustand und/oder die Geschwindigkeit des Mittels 12 zum Vordosieren steuern kann.

Das Mittel 12 zum Vordosieren ist oberhalb und vor einem Mittel 13 zum Vereinzeln der Stanzteile 8, so dass ein Stanzteilhaufen 5 per Schwerkraft auf das einem Mittel 13 zum Vereinzeln der Stanzteile 8 fallen kann.

Das Mittel 13 zum Vereinzeln der Stanzteile 8 umfasst eine Fördereinrichtung mit einem Träger 14, der gelagert ist, um eine oszillierende Bewegung auszuführen. Der Träger 14 hat ein dem Mittel 12 zum Vordosieren zugeordnetes, erstes Trägerende 15 und ein in Längserstreckung gegenüberliegendes, zweites Trägerende 16. Die Trägerenden 15, 16 sind gelagert, um einen Aufwärts- und Abwärtshub und einen Vorwärts- und Rückwärtshub auszuüben, wobei der Hub des ersten Trägerendes (15) größer ist als der Hub des zweiten Trägerendes (16).

Hierfür ist im Bereich des ersten Trägerendes (15) wenigstens ein drehbar gelagertes Drehelement 17 mit einer Drehachse 18 vorgesehen (Fig. 7), wobei sich die Drehachse 18 im Wesentlichen senkrecht zur Förderrichtung 10 erstreckt. Der Träger 14 ist über einen Abstandhalter 19 mit dem Drehelement 17 kraftschlüssig verbunden. Der Abstandhalter 19 ist in einem Abstand zur Drehachse 18 des Drehelements 17 mit dem Drehelement 17 verbunden, wobei der Abstand vom Abstandhalter 19 zur Drehachse 18 veränderbar ist. Zum Verändern des Abstandes weist das Drehelement 17 eine längliche Aussparung 20 auf, entlang der der Abstandhalter 19 verstellbar festlegbar ist. Das zweite Trägerende 16 ist um eine Schwenkachse 21 schwenkbar gelagert.

Der Träger 14 weist ein treppenartig abgestuftes Flächenelement 22 als Auflage für die zu vereinzelnden Stanzteile 8 auf, dessen Höhe sich vom ersten Trägerende 15 bis zum zweiten Trägerende 16 verringert. Es hat sich als besonders vorteilhaft gezeigt, dass durch die Abstufung und oszillierende Bewegung ein materialschonendes und wirksames Vereinzeln stattfindet.

Das Mittel 13 zum Vereinzeln der Stanzteile 8 ist in Förderrichtung 10 vor und über einem Träger 23 zum Aufnehmen von vereinzelten Stanzteilen 8 angeordnet, so dass vereinzelte Stanzteile 8 per Schwerkraft auf das Mittel 13 zum Vereinzeln der Stanzteile 8 fallen kann.

Der Träger 23 zum Aufnehmen von vereinzelten Stanzteilen 8 ist eine Entnahmestation 24, der ein Roboter 25 zugeordnet ist. In der gezeigten Ausführungsform entnimmt der Roboter 25 vereinzelte Stanzteile 8 und legt diese auf eine weitere Fördervorrichtung 26, die in Richtung zu einer Presse 27 führt.

Es ist eine Aufgabe der Erfindung, dass an der Entnahmestation 24 immer der richtige Füllstand an vereinzelten Stanzteilen 8 vorliegt, um die Presse kontinuierlich beschicken zu können. Abhängig vom Füllstand der Entnahmestation 24 kann die Steuerung 11 alle vorgenannten Vorrichtungskomponenten entsprechend steuern.

Nach dem Träger 23 zum Aufnehmen von vereinzelten Stanzteilen 8 ist eine Messstation 28 zum Erfassen von physischen Daten eines Stanzteiles 8 vorgesehen. Die Messstation 28 umfasst eine optische Messeinrichtung 29 und eine Beleuchtung, die auf einen seitlichen Rand der zu vermessenden Stanzteile 8 ausgerichtet sind. Die Stanzteile 8 befinden sich im Bereich der Messstation 28 auf einem Träger mit einer wellen- oder mäanderförmigen Auflage 30, die auch eine Beleuchtung und optische Vermessung der Unterseite der Stanzteile 8 ermöglicht.

## Patentansprüche

1. Vorrichtung zum Bereitstellen von vereinzelten Stanzteilen (8), die vorzugsweise aus Edelmetall bestehen, für die Herstellung von Prägeprodukten, wobei die Vorrichtung eine Steuerung (11), ein Mittel zum Vereinzeln der Stanzteile (8) und eine Förderrichtung (10) aufweist, entlang der Stanzteile (8) in Richtung zu einer Entnahmestation (24) befördert werden, **gekennzeichnet durch**
- einen Träger (7) zum Aufnehmen von zu vereinzelnden Stanzteilen (8), insbesondere von einem aufgeschütteten Stanzteilhaufen (5),
- ein Mittel (13) zum Vereinzeln der Stanzteile (8) umfassend eine Fördereinrichtung mit einem schwingenden Träger (14) und
- einen Träger (23) zum Aufnehmen von vereinzelten Stanzteilen (8).

2. Vorrichtung nach Anspruch 1, **dadurch gekennzeichnet, dass** der Träger (7) zum Aufnehmen von Stanzteilen (8) ein Mittel (12) zum Vordosieren oder eine in Förderrichtung (10) davor, insbesondere unmittelbar davor und vorzugsweise überlappend darüber angeordnete, erste Fördereinrichtung (6) ist, und dass vorzugsweise die erste Fördereinrichtung (6) ein Förderband mit einer nach oben gerichteten Auflagefläche für zu vereinzelnde Stanzteile (8) ist, wobei die Auflagefläche vorzugsweise mit einem Druckmittel (9) in Verbindung steht, das auf einen Teil der Unterseite der Auflagefläche Druck ausübt.

3. Vorrichtung nach Anspruch 2, **dadurch gekennzeichnet, dass** das Druckmittel (9) derart steuerbar ist, dass Druck in vorgegebenen periodischen Abständen oder an bestimmten Zeitpunkten abhängig vom Aufbringen von Stanzteilen (8) ausgeübt wird.

4. Vorrichtung nach einem der Ansprüche 1 bis 3, **dadurch gekennzeichnet, dass** das Mittel (12) zum Vordosieren ein Mittel zum gravimetrischen Vordosieren, insbesondere eine kombinierte Förder- und Wiegeeinrichtung zum Erfassen des ursprünglich aufgebrachten Gewichtes der Stanzteile (8), vorzugsweise ein mit einer Waage in Verbindung stehendes Förderband ist und/oder eine Einrichtung, beispielsweise eine Kamera oder einen Sensor, zum Erfassen der ursprünglich aufgebrachten Menge der Stanzteile (8) umfasst.

5. Vorrichtung nach einem der Ansprüche 1 bis 4, **dadurch gekennzeichnet, dass** das Mittel (12) zum Vordosieren in Förderrichtung (10) vor, insbesondere unmittelbar vor und vorzugsweise überlappend über dem Mittel (13) zum Vereinzeln der Stanzteile (8) angeordnet ist.

6. Vorrichtung nach einem der Ansprüche 1 bis 5, **dadurch gekennzeichnet, dass** der Träger (14) des Mittels (13) zum Vereinzeln der Stanzteile (8) gelagert ist, um eine schwingende Bewegung auszuführen, insbesondere eine oszillierende Bewegung.

7. Vorrichtung nach einem der Ansprüche 1 bis 6, **dadurch gekennzeichnet, dass** der Träger (14) des Mittels (13) zum Vereinzeln der Stanzteile (8) eine entlang der Förderrichtung (10) verlaufende Längserstreckung, ein dem Mittel (12) zum Vordosieren zugeordnetes, erstes Trägerende (15) und ein in Längserstreckung gegenüberliegendes, zweites Trägerende (16) aufweist, dass das erste Trägerende (15) und vorzugsweise auch das zweite Trägerende (16) gelagert ist, um einen Aufwärts- und Abwärtshub auszuüben, dass das erste Trägerende (15) und das zweite Trägerende (16) gelagert sind, um einen Vorwärts- und Rückwärtshub auszuüben, und dass vorzugsweise der Hub des ersten Trägerendes (15) größer ist als der Hub des zweiten Trägerendes (16).

8. Vorrichtung nach Anspruch 7, **dadurch gekennzeichnet, dass** im Bereich des ersten Trägerendes (15) wenigstens ein drehbar gelagertes Drehelement (17), insbesondere eine Scheibe oder ein Zylinder, mit einer Drehachse (18) vorgesehen ist, wobei sich die Drehachse (18) im Wesentlichen senkrecht zur Förderrichtung (10) erstreckt, und dass der Träger (14) über einen Abstandhalter (19) mit dem Drehelement (17) kraftschlüssig verbunden ist.

9. Vorrichtung nach Anspruch 8, **dadurch gekennzeichnet, dass** der Abstandhalter (19) in einem Abstand zur Drehachse (18) des Drehelements (17) mit dem Drehelement (17) verbunden ist, wobei der Abstand vom Abstandhalter (19) zur Drehachse (18) vorzugsweise veränderbar, insbesondere stufenlos einstellbar, ist und dass vorzugsweise das Drehelement (17) eine längliche Aussparung (20), insbesondere eine Nut, aufweist, die sich von einem der Drehachse (18) zugewandten Ende zu einem der Drehachse (18) abgewandten Ende erstreckt und entlang der der Abstandhalter (19) verstellbar festlegbar ist.

10. Vorrichtung nach einem der Ansprüche 7 bis 9, **dadurch gekennzeichnet, dass** das zweite Trägerende (16) um eine Schwenkachse (21) schwenkbar gelagert ist und dass vorzugsweise die Schwenkachse (21) durch eine durchlaufende Welle oder durch einander zugeordnete Achsstummel verläuft, die insbesondere im Wesentlichen in Richtung der Förderrichtung (10) und vorzugsweise auch im Wesentlichen senkrecht zur Förderrichtung (10) bewegbar angeordnet ist/sind.

11. Vorrichtung nach einem der Ansprüche 7 bis 10, **dadurch gekennzeichnet, dass** der Träger (14) ein profiliertes Flächenelement (22) als Auflage für die zu vereinzelnden Stanzteile (8) aufweist, insbesondere ein treppenartig abgestuftes Flächenelement (22), dessen Höhe sich vom ersten Trägerende (15) bis zum zweiten Trägerende (16) verringert.

12. Vorrichtung nach einem der Ansprüche 1 bis 11, **dadurch gekennzeichnet, dass** das Mittel (13) zum Vereinzeln der Stanzteile in Förderrichtung (10) vor, insbesondere unmittelbar vor und vorzugsweise überlappend über dem Träger (23) zum Aufnehmen von vereinzelten Stanzteilen (8) angeordnet ist.

13. Vorrichtung nach einem der Ansprüche 1 bis 12, **dadurch gekennzeichnet, dass** der Träger (23) zum Aufnehmen von vereinzelten Stanzteilen (8) die Entnahmestation (24), insbesondere eine Entnahmestation (24) von vereinzelten Stanzteilen (8) durch einen Roboter (25) ist, und einen Auflagebereich für durch das Mittel (13) zum Vereinzeln der Stanzteile (8) zugeführten Stanzteilen (8) sowie einen Entnahmebereich für vereinzelt bereitgestellten Stanzteilen (8) durch den Roboter (25) aufweist, oder dass der Träger (23) zum Aufnehmen von vereinzelten Stanzteilen (8) eine Entnahmestation (24) zum direkten Zuführen von vereinzelten Stanzteilen (8) zu einer Presse (27) oder zum Zuführen von vereinzelten Stanzteilen (8) auf eine zu einer Presse (27) führenden Fördereinrichtung (26) ist.

14. Vorrichtung nach einem der Ansprüche 1 bis 13, **dadurch gekennzeichnet, dass** im Bereich des Mittels (13) zum Vereinzeln der Stanzteile (8), insbesondere in Förderrichtung (10) nach dem Mittel (13) zum Vereinzeln der Stanzteile (8), vorzugsweise im Übergangsbereich vom Mittel (13) zum Vereinzeln der Stanzteile (8) zum Träger (23) zum Aufnehmen von vereinzelten Stanzteilen (8), und/oder im Bereich des Trägers (23) zum Aufnehmen von vereinzelten Stanzteilen (8), vorzugsweise nach dem Träger (23) zum Aufnehmen von vereinzelten Stanzteilen (8), eine Messstation (28) zum Erfassen von physischen Daten eines Stanzteiles (8) vorgesehen ist, wobei die Messstation (28) vorzugsweise eine optische Messeinrichtung (29), insbesondere eine Kamera oder einen Sensor, umfasst, die die Größe und/oder die Oberflächenbeschaffenheit des Stanzteiles (8) erfasst und/oder wobei die Messstation (28) einen Träger (30) mit einer profilierten Auflage, insbesondere eine wellen- oder mäanderförmige Auflage, oder einer lichtdurchlässigen Auflage für die Stanzteile (8) aufweist.

15. Vorrichtung nach Anspruch 14, **dadurch gekennzeichnet, dass** wenigstens eine Messeinrichtung (29) auf die Oberseite der zu vermessenden Stanzteile (8) und/oder wenigstens eine Messeinrichtung (29) auf einen seitlichen Rand der zu vermessenden Stanzteile (8) ausgerichtet ist.

16. Verfahren zum Bereitstellen von vereinzelten Stanzteilen (8), die vorzugsweise aus Edelmetall bestehen für die Herstellung von Prägeprodukten, bei dem Stanzteile (8) vereinzelt und entlang einer Förderrichtung (10) in Richtung zu einer Entnahmestation (24) befördert werden, **gekennzeichnet durch** die folgenden Schritte:
a) Aufbringen von Stanzteilen (8), insbesondere Aufschütten eines Stanzteilhaufens (5), auf einen Träger (7) zum Aufnehmen von Stanzteilen (8),
b) optionales Vordosieren der zu vereinzelnden Stanzteile (8) durch ein Mittel (12) zum Vordosieren, insbesondere Beförderung der Stanzteile (8) in Förderrichtung (10) und Erfassen der ursprünglich aufgebrachten Menge der Stanzteile (8),
c) Vereinzeln der Stanzteile (8) durch ein Mittel (13) zum Vereinzeln der Stanzteile (8) umfassend eine Fördereinrichtung mit einem schwingenden Träger (14),
d) Bereitstellen der vereinzelten Stanzteile (8) auf einem Träger (23) zum Aufnehmen von vereinzelten Stanzteilen (8) und
e) Steuern zumindest der Schritte b) und c) abhängig von der Anzahl an Stanzteilen (8), die sich auf dem Träger (23) zum Aufnehmen von vereinzelten Stanzteilen (8) befinden, durch eine Steuerung (11).
